# DEMANDE DE BREVET EUROPEEN

(11) **EP 1 704 774 A1**
(43) Date de publication de la demande: **27.09.2006**
(21) Numéro de dépôt: 05447063.8
(22) Date de dépôt: 24.03.2005
(51) Int. Cl.: A01K 13/00

(54) **Cabine transportable pour le nettoyage des pattes d'un animal**

(71) Demandeur: Theodorou, Panayotis, 5080 Rhisnes (BE)
(72) Inventeur: Theodorou, Panayotis, 5080 Rhisnes (BE)
(74) Mandataire: Cauchie, Daniel

(57) **Abrégé**

L'invention concerne une cabine transportable (1) pour le nettoyage de la partie inférieure des pattes d'un animal domestique notamment le chien, du genre comportant un compartiment supérieur d'hébergement de l'animal, un compartiment inférieur formant caisson comportant une pompe submersible, un plancher (6) de séparation des deux compartiments et des rampes de pulvérisation de liquide de nettoyage.

L'invention est caractérisée en ce que la face du plancher en contact avec les pattes de l'animal est garnie de moyens d'écartament (12) des parties extrêmes desdites pattes.

## Description

La présente invention se rapporte, d'une manière générale, à une cabine pour le nettoyage des pattes d'un animal.

Plus précisément, l'invention concerne une cabine transportable pour le nettoyage des pattes d'un animal, en particulier de la partie inférieure des pattes d'un animal domestique, notamment le chien, du genre comportant un compartiment supérieur d'hébergement de l'animal, un compartiment inférieur formant caisson comprenant une pompe submersible, un plancher de séparation des deux compartiments et des rampes de pulvérisation de liquide de nettoyage.

L'animal, notamment l'animal domestique tel que le chien, qui a séjourné à l'extérieur d'une habitation pose généralement un problème lorsqu'il doit réintégrer celle-ci. En effet, les pattes de cet animal, et en particulier leurs extrémités, sont généralement souillées de matières diverses telles que terre, herbes ou autres débris qu'il s'avère nécessaire d'éliminer par souci de propreté.

Fréquemment, les particuliers procèdent au nettoyage des pattes, à l'intérieur même de l'habitation, selon des méthodes plus ou moins adaptées et fastidieuses par exemple en procédant au nettoyage de chaque patte individuellement avec un chiffon de papier ou de tissu.

Des dispositifs pour le toilettage ou le lavage d'animaux ont déjà été proposés. A ce titre, on peut citer le dispositif pour le nettoyage d'animaux domestiques décrit dans le brevet US 3793987 comprenant une enceinte formée d'un compartiment supérieur muni, à sa partie supérieure, de rampes de pulvérisation de liquide délivré par une source extérieure de liquide de nettoyage et un compartiment inférieur renfermant une pompe submersible pour l'évacuation de ce liquide de lavage, les deux compartiments étant séparés par un plancher incliné, en un seul tenant, servant de support à l'animal.

D'autre part, on a rapporté dans le brevet US 4020796, un dispositif portable pour le lavage d'animaux comprenant une enceinte dont le fond est recouvert d'un plancher, en un seul tenant, perforé et légèrement surélevé. Cette enceinte comprend, en outre, des conduits perforés, adjacents aux parois longitudinales ainsi qu'une rampe centrale, pour projection verticale de liquide, disposée dans l'axe longitudinal de l'enceinte.

Un autre dispositif pour le lavage d'un animal fait l'objet du brevet US 4549502. Ce dispositif est formé d'une enceinte, de différents conduits de pulvérisation de liquide reliés à l'extérieur de l'enceinte et d'un plancher incliné, muni d'un drain central et d'une pompe de décharge située sous le plancher.

On mentionnera également la demande de brevet français FR 2638319 qui décrit un dispositif de lavage d'oiseaux constitué de deux bacs superposés, l'un supérieur dans lequel courent des conduits perforés pour l'émission de jets d'eau, l'autre inférieur dans lequel est disposée une pompe submersible pour l'alimentation des conduits du bac supérieur.

Ce bac inférieur sert de réserve d'eau et de récipient pour l'eau dégoulinant du bac supérieur et passant par des perforations pratiquées dans le fond de ce bac supérieur.

Aucun de ces dispositifs n'apparaît toutefois adapté au nettoyage des pattes d'un animal domestique, en particulier des extrémités de ces pattes à savoir doigts, griffes, espaces interdigitaux et coussinets plantaires où se concentrent la plupart des souillures collectées par l'animal lors de séjours à l'extérieur d'une habitation.

La présente invention a pour but de proposer une cabine transportable adaptée au nettoyage des pattes d'un animal domestique tel que le chien, en particulier de la partie inférieure de ces pattes, cabine qui permet de pallier les inconvénients de l'état de la technique.

Pour atteindre ce but, la cabine du type indiqué précédemment est caractérisée en ce que la face du plancher en contact avec les pattes de l'animal est garnie de moyens d'écartement des parties extrêmes desdites pattes.

Selon l'invention, ces moyens d'écartement sont disposés sur des zones planes du plancher et sont formées d'une pluralité de saillies aptes à libérer les espaces interdigitaux de manière à augmenter l'efficacité du nettoyage des doigts, griffes et coussinets plantaires.

Les saillies en question peuvent être de types différents et se présenter, par exemple sous la forme d'une pluralité de nervures longitudinales, habituellement parallèles et écartées l'une de l'autre d'une mesure sensiblement constante.

Toutefois, selon un mode de réalisation préféré, l'ensemble de ces saillies prend la configuration d'une pluralité de reliefs, disposés notamment en alignements ou en quinconce, et habituellement à sommets aplatis ou plus particulièrement bombés. Ces reliefs à sommets bombés, formant alvéoles, sont préférés car moins susceptibles d'inconfort pour l'animal puisque dépourvus d'angles vifs.

Les dimensions de ces saillies et leur écartement les unes des autres dépendront de l'espèce animale à nettoyer. Dans le cas du chien, elles seront habituellement de 5 à 10 mm de hauteur, de 5 à 10 mm de largeur, l'espacement entre deux saillies rapprochées étant d'environ 3 à 5 mm.

D'autre part, ces saillies peuvent être rapportées sur le plancher par exemple par collage ou soudure ou au contraire en constituer des déformations obtenues par exemple par emboutissage ou encore venant de moulage.

La cabine de nettoyage selon l'invention est habituellement formée d'un compartiment inférieur et d'un compartiment supérieur séparés l'un de l'autre par un plancher.

Le compartiment inférieur comprend un fond et des parois latérales fixes et sensiblement de même hauteur c'est-à-dire deux parois longitudinales et deux parois transversales.

Dans le cadre de la présente description ainsi que des revendications, les termes « longitudinal » et « longitudinalement » désignent chacun une direction selon l'axe longitudinal de la cabine et les termes « transversal » et « transversalement » désignent chacun une direction selon l'axe transversal de cette même cabine.

Quant au compartiment supérieur, celui-ci peut être élaboré de différentes manières.

Ainsi, selon une caractéristique supplémentaire de l'invention, le compartiment supérieur comprend deux parois latérales longitudinales sous forme d'une extension des parois latérales longitudinales du compartiment inférieur.

En outre, selon une autre caractéristique de l'invention, les parois longitudinales des compartiments inférieur et supérieur sont montées superposées dans leur prolongement respectif, les parois longitudinales du compartiment supérieur étant soit amovibles soit pivotantes autour de moyens fixés sur celles-ci et aux parois longitudinales du compartiment inférieur.

De même, selon une autre caractéristique de l'invention, les parois latérales longitudinales du compartiment supérieur sont montées adjacentes aux parois longitudinales du compartiment inférieur et coulissantes le long de celles-ci.

Différents ajouts ou modifications peuvent être apportés à la cabine ci-dessus selon les buts ou améliorations recherchés.

Ainsi, selon une caractéristique supplémentaire de l'invention, les parois latérales longitudinales du compartiment supérieur sont pourvues de moyens aptes à modifier la distance séparant ces parois latérales l'une de l'autre.

Si nécessaire, des parois transversales additionnelles peuvent être prévues pour compléter la configuration du compartiment supérieur.

Ainsi, selon une autre caractéristique de l'invention, une ou deux parois transversales sont solidarisées aux parois longitudinales du compartiment supérieur ou au fond de la cabine et montées pivotantes.

De même, selon une caractéristique supplémentaire de l'invention, une ou deux parois transversales sont solidarisées aux parois longitudinales du compartiment supérieur et montées amovibles.

En outre, des moyens de contention de l'animal à l'intérieur de la cabine peuvent être incorporés sous la forme par exemple de barres transversales reliant les deux parois longitudinales du compartiment supérieur.

Ces barres peuvent être totalement amovibles c'est-à-dire capables de désolidarisation de chacune des parois longitudinales en question ou au contraire partiellement amovibles c'est-à-dire fixées à demeure par l'une de leurs extrémités à l'une de ces parois, l'autre extrémité étant solidarisée de manière amovible à l'autre de ces parois.

Au surplus, et selon une autre caractéristique, la cabine peut être pourvue de moyens de roulage tels que roulettes éventuellement escamotables ou autres.

La cabine selon l'invention est habituellement élaborée en un matériau relativement léger et inaltérable aux liquides et additifs de nettoyage habituellement utilisés pour la toilette animale. Généralement, cette cabine est conçue en un matériau synthétique polymérique tel que le chlorure de polyvinyle de préférence le chlorure de polyvinyle cellulaire (« PVC cellulaire »).

Le plancher qui sépare les deux compartiments de la cabine est généralement non incliné et peut être conçu soit d'un seul tenant soit en plusieurs portions séparées, de préférence deux portions comportant chacune deux bords longitudinaux et deux bords transversaux.

D'autre part, ce plancher est disposé non juxtaposé, partiellement ou totalement juxtaposé aux parois du compartiment inférieur de la cabine, en sorte que peuvent éventuellement subsister des orifices latéraux, entre les bords extérieurs du plancher et les parois de la cabine, aptes à permettre une communication entre le compartiment inférieur et le compartiment supérieur.

De même, lorsque le plancher est élaboré en plusieurs portions, des orifices centraux sont présents entre des bords intérieurs du plancher à savoir les couples de bords transversaux les plus rapprochés.

Ces orifices de communication, lorsqu'ils existent, auront pour fonction principale d'assurer, vers le compartiment inférieur, l'écoulement du liquide de nettoyage usé et chargé de ses débris ainsi que de faciliter le retrait du plancher.

Lorsque le plancher est d'un seul tenant et totalement juxtaposé aux parois de la cabine, un ou, de préférence, plusieurs orifices de communication entre les deux compartiments pourront être aménagés dans la partie alvéolée du plancher. Toutefois, de tels orifices centraux peuvent être prévus également lorsque subsistent un ou plusieurs orifices latéraux.

Lorsque le plancher est conçu en plusieurs portions, la jonction de ces portions peut être envisagée longitudinalement ou, de préférence, transversalement.

Par exemple, lorsque le plancher est formé par la réunion de deux portions selon l'axe longitudinal de la cabine, la jonction peut être opérée au niveau, par exemple, de la médiane longitudinale de celle-ci.

Selon une autre caractéristique de l'invention, le plancher est muni d'une cloison séparatrice longitudinale. Cette cloison, avantageusement dépourvue de saillies et préférentiellement médiane, s'étend sur toute la longueur du plancher, qu'il soit d'un seul tenant ou en plusieurs portions.

Elle a essentiellement pour fonction de contraindre l'animal, lors de son introduction dans la cabine, selon l'axe longitudinal de celle-ci, à disposer ses pattes antérieures et postérieures de part et d'autre de cette cloison sur la surface du plancher réservée à cet effet. Cette cloison aura généralement une hauteur de 3 à 6 cm, de préférence, environ 4 cm et sera avantageusement dépourvue d'angles vifs de manière à éviter la possibilité de blessures aux doigts et coussinets des pattes de l'animal. A titre d'exemple, cette cloison peut être configurée de manière à présenter, en coupe transversale, la forme, par exemple, d'un V renversé, de préférence à pointe tronquée.

Hormis une pluralité de saillies essentiellement sous la forme d'alvéoles, le plancher peut, en outre, comporter diverses autres modifications de sa planéité.

Ainsi, selon une caractéristique supplémentaire de l'invention, le plancher est muni d'une ou de plusieurs ailes qui s'étendent, à partir d'un ou de plusieurs de ses bords longitudinaux et/ou transversaux, du côté où se déploie la cloison longitudinale.

La partie du plancher destinée à recevoir l'animal constitue, par conséquent, le fond de deux dépressions formant cuvettes, séparées par ladite cloison longitudinale.

Si nécessaire, les bords des ailes en question peuvent être eux-mêmes munis de rebords repliés du côté inverse à celui de la cloison longitudinale.

Ces ailes et rebords, qui peuvent se déployer jusqu'aux parois de la cabine, auront pour objet principal de combler au moins partiellement un ou plusieurs orifices latéraux de communication et/ou de contraindre l'animal à positionner ses pattes sur la surface du plancher réservée à cet effet.

Le plancher ci-dessus qu'il soit d'un seul tenant ou en plusieurs portions et que des orifices latéraux et/ou centraux soient présents, peut, si nécessaire, comporter une pluralité d'orifices internes disposés avantageusement entre les moyens d'écartement le garnissant, orifices internes destinés également à l'évacuation dans le compartiment inférieur, du liquide de nettoyage présent dans le compartiment supérieur.

En outre, que ce plancher soit formé d'un élément d'un seul tenant ou de plusieurs éléments chacun équivalant à une portion, chaque élément sera constitué d'une feuille unique de matériau pourvue des différents reliefs évoqués précédemment .

Le plancher ainsi conçu peut être élaboré en une matière inaltérable au liquide de nettoyage, de préférence une matière inoxydable, par exemple l'acier galvanisé. Plus généralement, il proviendra de moulage à partir d'une matière synthétique polymérique, par exemple un polystyrène ou un polyéthylène ou de préférence un polyméthacrylate.

Les rampes de pulvérisation ou de projection de liquide de nettoyage peuvent être élaborées en un matériau analogue ou identique à celui qui est utilisé pour le plancher. Elles sont généralement montées amovibles à l'intérieur de la cabine et disposées latéralement c'est-à-dire positionnées adjacentes aux bords longitudinaux ou transversaux du plancher ou à proximité de ceux-ci.

Lorsque le plancher est constitué de plusieurs portions et que les rampes latérales sont transversales, celles-ci seront disposées à proximité des bords transversaux du plancher les plus éloignés.

Selon la longueur du plancher, ces rampes latérales pourront être adjacentes aux parois transversales de la cabine ou au contraire en retrait de celles-ci. Par conséquent, des orifices pourront subsister entre la rampe et le bord transversal le plus proche du plancher et/ou entre la rampe et la paroi transversale la plus proche de cette rampe.

Ces orifices seront avantageusement mis à profit pour assurer l'écoulement, dans le compartiment inférieur, du liquide de nettoyage.

En conséquence, selon une autre caractéristique de l'invention, chaque bord transversal de chacune des faces du plancher en contact avec les pattes de l'animal est séparé d'une rampe de pulvérisation par un orifice de communication entre les compartiments supérieur et inférieur.

D'autre part, selon une caractéristique supplémentaire de l'invention, les rampes sont montées adjacentes aux parois transversales ou en retrait de celles-ci.

Ce retrait, plus ou moins prononcé, dépend pour l'essentiel de la longueur du plancher qui elle-même sera adaptée en fonction de la taille de l'animal à nettoyer.

Ainsi, dans le cas d'une cabine selon l'invention dont le compartiment inférieur répond à des dimensions préétablies, plus la longueur du plancher est réduite, plus le retrait d'une rampe latérale transversale, par rapport à la paroi transversale la plus proche sera prononcé et plus les dimensions de l'orifice ainsi créé seront importantes.

La cabine de nettoyage selon l'invention peut comporter au minimum deux rampes latérales avantageusement deux rampes disposées en opposition en sorte que chaque rampe puisse assurer une projection de liquide sur deux pattes de l'animal. Toutefois, jusqu'à 8 rampes latérales réparties en 4 couples peuvent être prévues. Dans ce cas, chaque couple formé d'une rampe latérale longitudinale et d'une rampe latérale transversale est affecté au nettoyage d'une patte de l'animal.

Avantageusement, les rampes latérales peuvent être complétées par au moins une rampe intermédiaire ou centrale qui peut être longitudinale ou transversale, c'est-à-dire positionnée entre respectivement des rampes latérales opposées, adjacentes à des parois longitudinales de la cabine, ou des rampes latérales opposées, adjacentes à des parois transversales de cette même cabine.

Par conséquent, lorsque l'animal aura intégré la cabine de telles rampes intermédiaires seront situées, lorsqu'elles sont longitudinales, entre les pattes gauches et les pattes droites de l'animal et, lorsqu'elles sont transversales, entre les pattes antérieures et les pattes postérieurs de cet animal.

Dans cette configuration, jusqu'à 4 rampes intermédiaires peuvent être prévues, c'est-à-dire une par patte animale.

Lorsque le plancher est d'un seul tenant et que les rampes sont disposées selon l'axe longitudinal de la cabine, la ou les rampes intermédiaires sont localisées de préférence dans la cloison en forme de V. Toutefois, lorsque ces rampes intermédiaires sont transversales, celles-ci sont positionnées à un niveau supérieur à celui du plancher non encastrées ou partiellement encastrées dans la cloison longitudinale.

Selon une mise en oeuvre particulière et préférée, les rampes intermédiaires transversales sont utilisées de préférence en relation avec un plancher formé de deux portions. Dans un tel cas, la ou les rampes intermédiaires sont positionnées avantageusement au moins partiellement à l'intérieur de l'orifice de séparation des deux portions.

Ainsi, selon une caractéristique particulière de l'invention, le plancher est formé de deux portions séparées comportant chacune deux bords longitudinaux et deux bords transversaux, chacun des bords transversaux étant associé à une rampe de pulvérisation positionnée adjacente à ce bord ou à proximité de celui-ci.

Toutefois, selon une caractéristique particulièrement avantageuse et préférée de l'invention, le plancher est formé de deux portions séparées comportant chacune deux bords longitudinaux et deux bords transversaux, chacun des deux bords transversaux les plus éloignés étant associé à une rampe de pulvérisation latérale positionnée adjacente à ce bord ou à proximité de celui-ci et chacun des bords transversaux les plus rapprochés étant associé à une rampe de pulvérisation intermédiaire positionnée adjacente à chacun d'eux ou à proximité de chacun d'eux.

De manière à assurer une projection ou pulvérisation de liquide de nettoyage, chaque rampe comporte des orifices de pulvérisation alignés sensiblement parallèlement au plancher, situés à un niveau supérieur à celui des zones planes alvéolées et orientés de telle manière que le liquide expulsé de ces orifices soit projeté de préférence sur la partie inférieure des pattes de l'animal, essentiellement au niveau des doigts, ongles, espaces interdigitaux et coussinets plantaires.

Selon une autre caractéristique de l'invention, les rampes de pulvérisation latérales sont munies d'orifices de pulvérisation percés sur une seule de ses faces et la rampe de pulvérisation intermédiaire est munie d'orifices de pulvérisation percés sur deux faces opposées de celle-ci.

Avantageusement, ces orifices sont regroupés en des ensembles distincts d'orifices.

D'autre part, les rampes situées à proximité des bords longitudinaux et/ou transversaux ainsi que les rampes intermédiaires sont munies d'un ou de plusieurs ensembles de ce type.

Toutefois, lorsque deux rampes intermédiaires transversales, situées dans leur prolongement respectif, sont prévues ou lorsqu'une seule rampe intermédiaire est envisagée, chacune de ces rampes étant positionnée adjacente à chacun des bords transversaux les plus rapprochés de deux portions du plancher, ou à proximité de chacun de ces bords les plus rapprochés, il est prévu des paires d'ensembles d'orifices de pulvérisation constituées chacune de deux ensembles situés en regard l'un de l'autre c'est-à-dire constituées chacune de deux ensembles d'orifices percés sur deux faces opposées de la ou des rampes, de sorte que chaque ensemble d'orifices de chaque paire permet la projection de liquide dans une même direction mais dans des sens opposés.

Selon un mode de réalisation préféré de l'invention, une seule rampe intermédiaire, sensiblement de même longueur que la distance séparant les deux parois longitudinales du compartiment inférieur, est envisagée, cette rampe comportant deux paires d'ensembles d'orifices. Dans cette configuration, chaque paire d'ensembles d'orifices dirige des jets de liquide dans des sens opposés de sorte qu'une paire d'ensembles est affectée au nettoyage des pattes gauches et l'autre au nettovaae des pattes droites de l'animal.

Le compartiment inférieur qui sert de réservoir de liquide de nettoyage propre et de liquide de nettoyage usé provenant du compartiment supérieur, comprend quant à lui une pompe submersible généralement de type électrique dont la sortie est reliée à un conduit d'alimentation de liquide.

Ainsi, selon une caractéristique supplémentaire de l'invention, la pompe est reliée à un conduit principal qui comporte, sur son parcours, une valve à 3 voies, dont l'une des sorties est reliée, par l'intermédiaire d'un conduit, aux rampes de pulvérisation, tandis que l'autre sortie est connectée à un conduit de décharge.

En outre, selon une caractéristique alternative, la pompe est reliée à un conduit principal qui comporte sur son parcours une dérivation en Y dont l'une des branches, pourvue d'un moyen d'ouverture/fermeture, est reliée aux rampes de pulvérisation tandis que l'autre branche, munie d'un moyen d'ouverture/fermeture, est reliée à un conduit de décharge.

L'invention sera mieux comprise et d'autres buts, caractéristiques et avantages de celle-ci apparaîtront plus clairement au cours de la description explicative qui va suivre faite en référence aux dessins annexés donnés uniquement à titre d'exemples illustrant différents modes de réalisation de l'invention et dans lesquels :
- la figure 1 est une vue en perspective d'une cabine de nettoyage selon l'invention,
- la figure 2 est une vue en plan d'un mode de réalisation du plancher et des rampes de pulvérisation,
- la figure 3 est une vue frontale d'une portion de plancher ainsi que d'une rampe de pulvérisation,
- la figure 4 est une représentation en coupe frontale de différents types de reliefs pour garniture du plancher,
- la figure 5 est une vue schématique en coupe transversale du compartiment inférieur,
- les figures 6 à 11 sont des représentations frontales ou latérales de divers modes de réalisation du compartiment supérieur,
- la figure 12 est une représentation d'une cabine complètement fermée latéralement,
- la figure 13 est une représentation en coupe longitudinale de divers positionnements de rampes de pulvérisation,
- les figures 14 et 15 sont des représentations de modes de réalisation d'une cabine pourvue de divers accessoires,

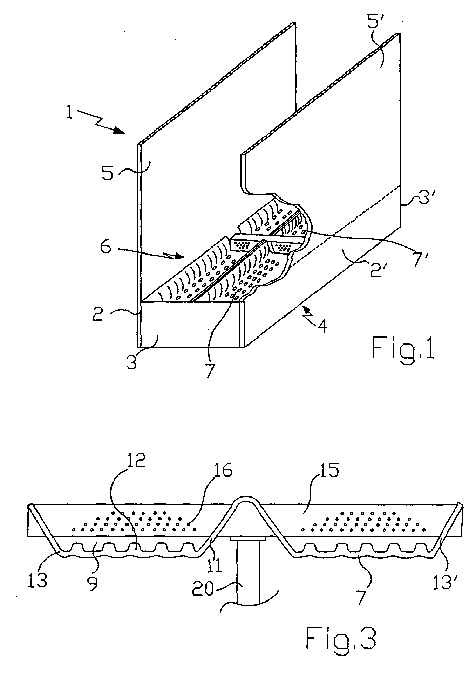

Tel que représenté à la figure 1, la cabine 1 est constituée dans sa partie inférieure de deux parois longitudinales 2, 2' opposées et deux parois transversales 3, 3' opposées, toutes quatre sensiblement de même hauteur et reliées entre elles par un fond 4. Ces quatre parois associées au fond délimitent ainsi un compartiment inférieur formant caisson. La figure 1 montre également que les parois longitudinales 2, 2' s'étendent verticalement pour former deux parois supplémentaires marquées 5, 5' délimitant ainsi un compartiment supérieur.

Ces deux compartiments, avantageusement en PVC cellulaire, sont séparés par un plancher 6, horizontal, positionné à une hauteur ne dépassant celle des parois transversales 3, 3'. Ce plancher 6 est formé de deux portions distinctes 7, 7' non juxtaposées l'une à l'autre. Par conséquent, et tel qu'il apparaît à la figure 2, des orifices 8, 9, 10 subsistent qui assurent une communication entre les compartiments supérieur et inférieur.

Chacune de ces portions 7, 7', dont une représentation, par exemple la portion 7, est visible en coupe à la figure 3, est constituée d'une feuille unique de matière synthétique telle que polyméthacrylate de méthyle laissant apparaître divers reliefs venus de moulage à savoir une cloison médiane respectivement 11, 11' dont la forme affecte celle d'un V renversé ainsi qu'une pluralité d'alvéoles 12. Des ailes 13, 13' issues des bords des portions alvéolées, s'étendent jusqu'aux parois transversales 2, 2', et complètent une configuration en double cuvette donnée au plancher. En outre, ces portions de plancher sont posées sur des entretoises, non représentées, lesquelles sont fixées dans des rainures pratiquées dans les parois 2, 2'.

Cette cloison centrée sur l'axe longitudinal X-X de la cabine a essentiellement pour fonction de contraindre l'animal, lors de son introduction dans la cabine du côté de la paroi transversale 3, à disposer ses pattes antérieures et postérieures de part et d'autre de cette cloison.

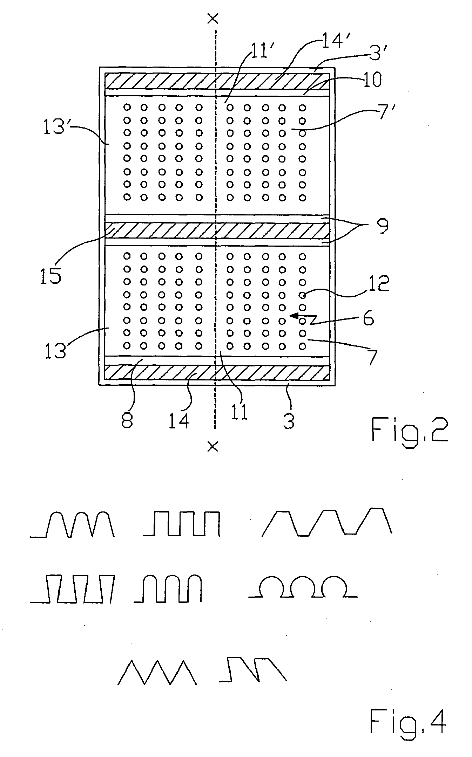

Les alvéoles 12 sont réparties de façon régulière sur les zones aplaties des portions 7 et 7' à raison par exemple de 4 à 7 alignements par exemple 5 alignements de 15 à 25 alvéoles par exemple 20 alvéoles par zone lorsqu'un chien de taille moyenne représente l'animal à nettoyer. A titre d'exemples, des configurations de reliefs utilisables sont représentées à la figure 4. Le plancher 6 étant amovible, les portions 7, 7' peuvent être remplacées, si nécessaire, par des portions semblables dont la taille et la répartition d'alvéoles sont adaptées à la taille et au poids de l'animal à nettoyer.

D'autre part, on observe que le sommet de la cloison 11, 11' est dépourvu d'angle vif mais au contraire d'une arête émoussée non traumatisante pour l'animal qui viendrait à poser ses pattes sur celle-ci. Ce sommet est habituellement situé à une hauteur de l'ordre de 4 à 5 cm.

La figure 2 montre également que des rampes latérales transversales 14, 14' sont positionnées adjacentes aux parois transversales 3 et 3' respectivement et à proximité des portions de plancher 7, 7' tandis qu'une rampe transversale 15 intermédiaire est placée à proximité à la fois des portions 7 et 7'.

Ces diverses rampes sont sensiblement parallèles aux zones alvéolées du plancher et situées à même hauteur par rapport à ce plancher.

Conformément à l'invention et tel que représenté à la figure 3, les rampes 14, 14' et 15 sont pourvues de trous 16 régulièrement espacés, une représentation de ces rampes, par exemple la rampe 15 étant visible. Ces trous sont percés dans les parois des rampes, en regard des pattes d'un animal posées sur les zones alvéolées du plancher, et à une hauteur de l'ordre de celle des alvéoles ou légèrement supérieure en sorte qu'un liquide projeté à partir de ces trous puisse atteindre efficacement la partie inférieure des pattes de cet animal. Par conséquent, les rampes 14 et 14' seront pourvues chacune de deux ensembles de trous tandis que la rampe 15 fera apparaître quatre ensembles de trous formés de deux paires d'ensembles opposés. Dans ce cas, les trous d'une paire d'ensembles de trous sont percés sur deux faces longitudinales opposées de la rampe.

La figure 3 montre également l'un des orifices d'écoulement du liquide de nettoyage dans le compartiment inférieur, l'orifice 9 étant ici représenté.

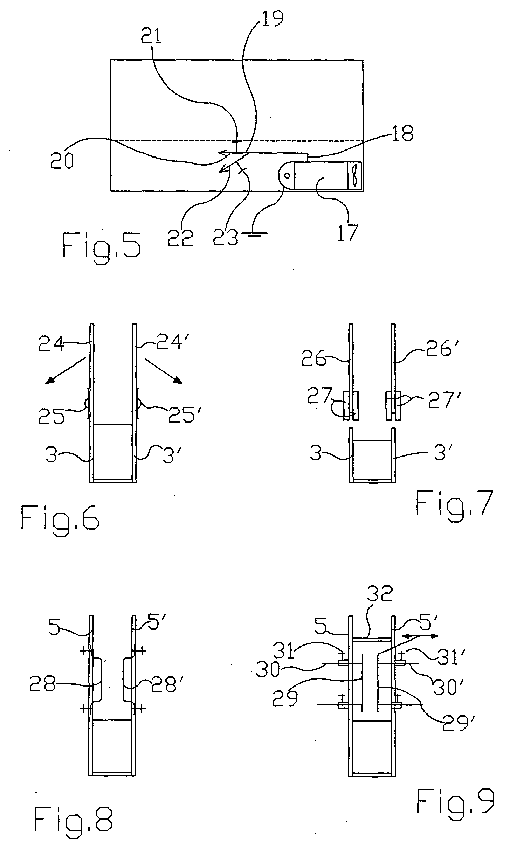

D'autre part, et tel qu'il apparaît schématiquement à la figure 5, une pompe submersible 17, logée dans le compartiment inférieur est susceptible, au moyen d'un cordon d'alimentation, d'être branchée sur une source de courant électrique, par exemple 220 volts.

D'autre part, la sortie de cette pompe est reliée à un conduit principal 18 qui comporte, sur son parcours, une dérivation en Y représentée en 19 dont une des branches est reliée aux rampes de pulvérisation par l'intermédiaire du conduit 20 pourvu du robinet 21 tandis que l'autre branche est connectée au conduit de décharge 22 muni du robinet 23.

Divers modes de réalisation du compartiment supérieur sont représentés en coupe transversale aux figures 6 à 10 où l'on observe .
- à la figure 6, deux parois longitudinales 24, 24' montées pivotantes autour des charnières 25, 25' pour rabattement éventuel contre les parois 3, 3' respectivement,
- à la figure 7, deux parois longitudinales 26, 26', montées amovibles, dont les bords inférieurs sont superposés aux bords supérieurs respectivement des parois 3, 3', par emboîtement dans des logements créés par des contreforts latéraux respectivement 27, 27',
- à la figure 8, deux parois longitudinales 28, 28' supplémentaires, sensiblement parallèles aux parois 5, 5' respectivement et montées fixes, dans ces parois, de manière à restreindre la distance entre ces parois 5, 5' selon une mesure pré-établie, par exemple en accord avec la taille de l'animal à nettoyer,

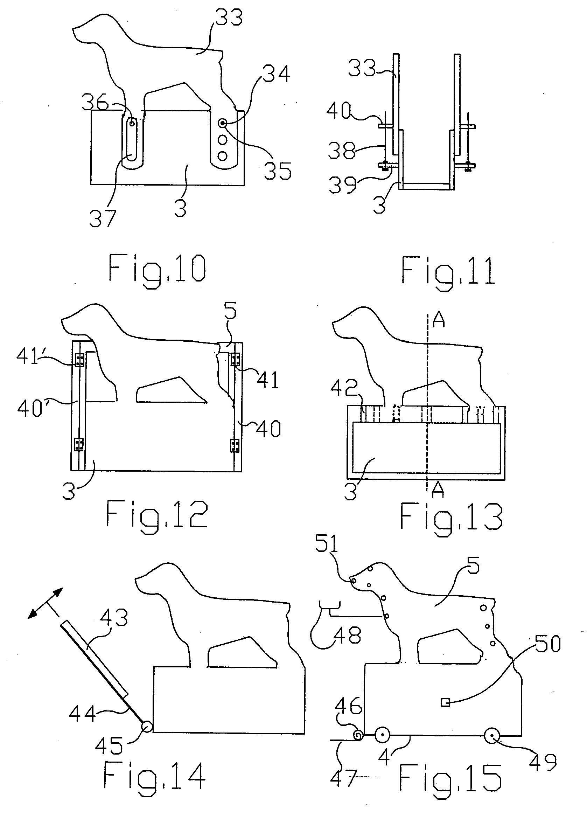

- à la figure 9, deux parois longitudinales supplémentaires 29, 29' sensiblement parallèles aux parois 5, 5' respectivement et montées mobiles l'une vers l'autre par l'intermédiaire respectivement des tiges 30, 30', coulissantes dans les parois respectivement 5, 5'. La distance entre les parois 5, 5' peut être modifiée à la demande par rapprochement des parois 29, 29' et blocage à la distance souhaitée au moyen des vis 31, 31'. Cette figure 9 montre également une barre de traverse 32 reliant les parois 5, 5' et destinée à l'attachement de l'animal, à l'intérieur de la cabine, lors de l'opération de nettoyage,
- à la figure 10, la paroi longitudinale montée coulissante de manière discontinue contre la paroi 3. Des modifications de la hauteur de cette paroi 33 peuvent être apportées d'une part par serrage d'un écrou sur la tige filetée 34 fixée à demeure dans cette paroi et traversant un des orifices 35 et d'autre part par serrage d'un écrou sur la tige filetée 36 fixée à demeure dans cette même paroi 3 et traversant la rainure 37 dans laquelle elle coulisse librement.
- à la figure 11, la paroi longitudinale 33 montée coulissante de manière continue contre la paroi 3. Des modifications de la hauteur de cette paroi 33 peuvent être apportées par l'intermédiaire de la tige filetée 38 libre de rotation dans le téton 39 fixé à la paroi 3 et venant en prise avec le taraudage intérieur du téton 40 fixé à la paroi 33. Tel que représenté aux figures 12 à 15, la cabine est complétée ou modifiée, par divers accessoires.
- à la figure 12, deux parois transversales 40, 40' sont montées pivotantes par l'intermédiaire des charnières 41, 41' respectivement, pour rabattement contre les parois 3 et 5 respectivement. Ces parois 40, 40' permettent ainsi de fermer latéralement, de manière complète ou partielle, le compartiment supérieur,
- à la figure 13, des encoches 42 sont ménagées dans la paroi longitudinale 3 pour le logement des extrémités des rampes transversales de pulvérisation. Ces encoches permettent de modifier la positon des rampes latérales transversales par rapport à la rampe intermédiaire située au niveau du plan A-A de manière à adapter leur position à la taille de l'animal à nettoyer,
- à la figure 14, un tapis 43 apte à absorber par exemple le liquide de nettoyage, ce tapis étant fixé sur un support 44 lui-même monté pivotant autour d'une charnière ou d'un axe 45 disposé le long d'un bord transversal inférieur,
- à la figure 15, un enrouleur 46 fixé transversalement à la sortie du compartiment inférieur et au niveau du fond 4. Cet enrouleur est alimenté en matériau 47, par exemple du tissu ou du papier, capable d'absorber notamment le liquide de nettoyage. Le déroulement de ce matériau dans le sens de progression de l'animal à sa sortie de la cabine, permet le séchage au moins des coussinets plantaires,
   La figure 15 montre également une écuelle 48 fixée à la paroi 5 pour l'alimentation de l'animal, des roulettes 49 capables d'assurer la mobilité de la cabine ainsi qu'une fenêtre 50 pour le repérage du niveau de liquide de nettoyage dans le compartiment inférieur. Selon la grandeur de l'animal, des orifices 51 sont prévus pour la fixation, à différentes hauteurs, de la barre de traverse 32.

A la lecture de ce qui précède, on comprend qu'un animal, de préférence, un chien qui pénètre dans la cabine 1 du côté de la paroi transversale 3, sera amené, étant donné la configuration du plancher 6, à placer ses pattes antérieures sur la portion 7' et ses pattes postérieures sur la portion 7 et ce, de part et d'autre des portions de cloison médiane respectivement 11 ou 11'. Toutefois, si les pattes de l'animal sont posées malencontreusement au sommet de la cloison 11, 11', celles-ci glisseront sans dommages jusqu'aux zones alvéolées des portions 7 et 7' du plancher. Le poids de l'animal aidant, les doigts et griffes des extrémités des pattes se libèrent alors en raison de la présence des alvéoles 12 dégageant ainsi les espaces interdigitaux.

La pompe électrique 17, enclenchée, aspire alors le liquide de nettoyage, par exemple de l'eau chargée éventuellement de shampooing, préalablement déversé dans le compartiment inférieur et refoule ce liquide vers les rampes de pulvérisation 14, 14' et 15 par l'intermédiaire des conduits 18 et 20, le robinet 21 étant ouvert et le robinet 23 fermé.

Via les différents orifices 16 de pulvérisation, le liquide de nettoyage est alors pulvérisé ou expulsé en jets en direction des pattes de l'animal et plus particulièrement de leurs parties inférieures assurant ainsi un nettoyage des doigts, griffes, espaces interdigitaux et coussinets plantaires.

En fin de nettoyage, la pompe étant maintenue enclenchée, le liquide de nettoyage usé, qui s'écoule dans le compartiment inférieur par l'intermédiaire des orifices 8, 9 et 10 est ensuite refoulé à l'extérieur du compartiment inférieur via le conduit 22 par fermeture du robinet 21 et ouverture du robinet 23.

La cabine de nettoyage selon l'invention présente plusieurs avantages inhérents notamment à la conception de son plancher destiné à supporter l'animal. En effet, ce plancher garni de reliefs, généralement du genre alvéole, permet l'écartement des différentes parties formant les extrémités des pattes de l'animal et, en conséquence, un accès aisé pour leur nettoyage dans les moindres interstices.

D'autre part, cette cabine est transportable et facilement démontable puisque le plancher, simplement posé, peut être aisément enlevé pour accès au compartiment inférieur. Au surplus, les rampes de pulvérisation elles-mêmes, non fixées à demeure, peuvent être facilement extraites par exemple pour un entretien.

## Revendications

1. Cabine transportable pour le nettoyage des pattes d'un animal, en particulier de la partie inférieure desdites pattes, du genre comportant un compartiment supérieur d'hébergement de l'animal, un compartiment inférieur formant caisson comprenant une pompe submersible, un plancher de séparation des deux compartiments et des rampes de pulvérisation de liquide de nettoyage, **caractérisée en ce que** la face du plancher en contact avec les pattes de l'animal est garnie de moyens d'écartement des parties extrêmes desdites pattes.

2. Cabine selon la revendication 1, **caractérisée en ce que** les moyens d'écartement sont constitués d'une pluralité de reliefs.

3. Cabine selon la revendication 1 ou 2, **caractérisée en ce que** le plancher est muni d'une cloison séparatrice longitudinale.

4. Cabine selon une des revendications 1 à 3, **caractérisée en ce que** le plancher est formé de deux portions séparées comportant chacune deux bords longitudinaux et deux bords transversaux.

5. Cabine selon une des revendications 1 à 4, **caractérisée en ce que** le plancher est formé de deux portions séparées comportant chacune deux bords longitudinaux et deux bords transversaux, chacun des deux bords transversaux les plus éloignés étant associé à une rampe de pulvérisation latérale positionnée adjacente à ce bord ou à proximité de celui-ci et chacun des deux bords transversaux les plus rapprochés étant associé à une rampe de pulvérisation intermédiaire positionnée adjacente à chacun d'eux ou à proximité de chacun d'eux.

6. Cabine selon la revendication 5, **caractérisée en ce que** les rampes de pulvérisation latérales sont munies d'orifices de pulvérisation de liquide de nettoyage percés sur une seule de ses faces et la rampe de pulvérisation intermédiaire est munie d'orifices de pulvérisation de liquide percés sur deux orifices opposées de celle-ci.

7. Cabine selon une des revendications 1 à 6, **caractérisée en ce que** chaque bord transversal de chacune des faces du plancher, en contact avec les pattes de l'animal, est séparé d'une rampe de pulvérisation par un orifice de communication entre les compartiments supérieur et inférieur.

8. Cabine selon une des revendications 1 à 7, **caractérisée en ce que** les rampes sont montées adjacentes aux parois transversales ou en retrait de celles-ci.

9. Cabine selon une des revendications 1 à 8, **caractérisée en ce que** les rampes de pulvérisation sont montées amovibles.

10. Cabine selon une des revendications 1 à 9, **caractérisée en ce que** la pompe est reliée à un conduit principal qui comporte sur son parcours une dérivation en Y dont l'une des branches, pourvue d'un moyen d'ouverture/fermeture, est reliée aux rampes de pulvérisation tandis que l'autre branche, munie d'un moyen d'ouverture/fermeture, est reliée à un conduit de décharge.
